# EUROPÄISCHE PATENTSCHRIFT

(11) **EP 2 318 670 B1**
(45) Veröffentlichungstag und Bekanntmachung des Hinweises auf die Patenterteilung: **10.10.2012**
(21) Anmeldenummer: 09781688.8
(22) Anmeldetag: 11.08.2009
(51) Int. Cl.: F01M 1/02, B60K 6/00

(54) **HYBRIDANTRIEBSEINRICHTUNG**
HYBRID DRIVE DEVICE
SYSTÈME DE PROPULSION HYBRIDE

(30) Priorität: 28.08.2008 DE 102008041637
(43) Veröffentlichungstag der Anmeldung: 11.05.2011
(73) Patentinhaber: Robert Bosch GmbH, 70442 Stuttgart (DE)
(72) Erfinder: STEUERNAGEL, Frank, 70469 Stuttgart (DE); FALKENSTEIN, Jens-Werner, 73434 Aalen (DE)
(86) Internationale Anmeldenummer: PCT/EP2009/060362
(87) Internationale Veröffentlichungsnummer: WO 2010/023097

(56) Entgegenhaltungen:
- EP-A- 1 103 404
- FR-A- 2 884 766
- GB-A- 2 443 528
- US-A- 5 799 744
- US-A- 5 823 282

## Beschreibung

Die vorliegende Erfindung betrifft eine Hybridantriebseinrichtung gemäß dem Oberbegriff des Anspruches 1 und eine Antriebseinrichtung gemäß dem Oberbegriff des Anspruchs 11.

### Stand der Technik

Hybridantriebseinrichtungen mit einer Verbrennungskraftmaschine und einer Elektromaschine sowie Antriebseinrichtungen mit einer Verbrennungskraftmaschine werden eingesetzt, um Kraftfahrzeuge anzutreiben. Die Verbrennungskraftmaschine benötigt eine Schmierung für die Lagerungen der Pleuelstangen und der Kurbelwelle. Hierfür werden Öldruckpumpen angesetzt, die mechanisch von der Verbrennungskraftmaschine angetrieben werden, um Öl unter Druck zur Schmierung zur Verfügung zu stellen. Ferner wird Öl unter Druck zum Antrieb von Stellorganen, beispielsweise zur Nockenwellenverstellung, eingesetzt. Die Ölpumpe ist nicht unabhängig von der Verbrennungskraftmaschine betreibbar, weil die Ölpumpe von dieser angetrieben wird. Zum Pumpen von Öl benötigt die Ölpumpe eine bestimmte Mindestdrehzahl.

Beim Starten und Stoppen der Verbrennungskraftmaschine soll Öl zur Schmierung zur Verfügung stehen. Zum Anlaufen und Starten der Verbrennungskraftmaschine ist diese nur unzureichend bzw. überhaupt nicht mit Öl zur Schmierung versorgt, weil die Drehzahl der Verbrennungskraftmaschine kleiner ist als die Mindestdrehzahl der Ölpumpe. Häufige Start - und Stoppvorgängen der Verbrennungskraftmaschine, die insbesondere bei Hybridantriebseinrichtungen auftreten, können zu einer Mangelschmierung der Verbrennungskraftmaschine führen, die z. B. die Lebensdauer aller gelagerten Motorbauteile inklusive deren Lager negativ beeinträchtigt. Daneben ist aufgrund der Festkörper- bzw. Mischreibung bei niedrigem Öldruck eine hohe Leistung zum Starten der Verbrennungskraftmaschine erforderlich. Öldruckbetätigte Stellorgane können nicht angesteuert werden, solange der Öldruck nicht ausreichend eingestellt ist. Beim Abstellen bzw. Auslaufen der Verbrennungskraftmaschinen nimmt der Öldruck ebenfalls ab, so dass Festkörper- bzw. Mischreibung entsteht, verbunden mit entsprechendem Verschleiß an den Lagestellen. Bei Turbomotoren können die Lager der Abgasturbolader Schaden nehmen, wenn ein Abstellen der Verbrennungskraftmaschine und dem damit verbundenen Öldruckabfall bei hohen Drehzahlen des Turboladers erfolgt.

Die DE 10140 944 A1 zeigt ein System zur Reduzierung der Festkörperreibung eines Kraftfahrzeugmotors. Das Schmieröl für den Kraftfahrzeugmotor wird von eine Ölförderpumpe zur Verfügung gestellt, welche elektrisch angetrieben ist. Dadurch kann der Schmieröldruck unabhängig von Drehzahl des Kraftfahrzeugmotors gesteuert werden.

Aus der DE 10 2006 045 371 A1 ist eine Vorrichtung zum Ausführen einer Startvorbereitung für einen Fahrzeugmotor bekannt. Mittels einer Personenauthentisierung kann der Start des Kraftfahrzeugmotors vorhergesagt werden und vorab eine elektrisch betriebene Ölpumpe betätigt werden, bevor der Motor tatsächlich gestartet wird.

Die DE 10 2005 024 359 A1 zeigt eine Hybridantriebseinrichtung für ein Kraftfahrzeug. Ein Antriebsstrang umfasst eine Brennkraftmaschine und eine elektrische Maschine zum Antrieb des Kraftfahrzeuges. Eine Startermaschine zum Starten der Brennkraftmaschine kann trennbar von der Brennkraftmaschine mit einer Kupplungseinheit verbunden sein. Dadurch kann die Startermaschine neben dem Antrieb für die Brennkraftmaschine auch zum Antrieb von Nebenaggregaten wie Klimakompressor oder Schmiermittelpumpen eingesetzt werden. Nachteiligerweise ist für die Ölpumpe eine zusätzliche Startermaschine erforderlich.

In der FR 2 884 766 ist eine Hybridantriebseinrichtung umfassend eine Verbrennungsmaschine, eine Elektromaschine und eine Ölpumpe zur Versorgung der Verbrennungskraftmaschine mit Öl offenbart. Diese Ölpumpe ist von der Elektromaschine antreibbar. Nachteiligerweise ist die Versorgung mit Öl unter Druck abhängig von der Ölpumpe und der Elektromaschine.

### Offenbarung der Erfindung

### Vorteile der Erfindung

Eine erfindungsgemäße Hybridantriebseinrichtung umfasst einen Antriebsstrang mit einer Verbrennungskraftmaschine zum Antrieb des Kraftfahrzeuges, einer Elektromaschine zum Antrieb des Kraftfahrzeuges, einer Antriebswelle, einer Kupplung zum kraftschlüssigen Verbinden und Trennen der Verbrennungskraftmaschine von der Antriebswelle, vorzugsweise ein Getriebe, eine Ölpumpe zur Versorgung der Verbrennungskraftmaschine mit Öl, wobei die Ölpumpe von der Elektromaschine antreibbar ist. Die Ölpumpe wird von der Elektromaschine zum Antrieb des Kraftfahrzeuges angetrieben. Dadurch ist in besonders vorteilhafter Weise keine zusätzliche Elektromaschine erforderlich, um die Ölpumpe unabhängig von dem Betrieb der Verbrennungskraftmaschine anzutreiben.

Insbesondere ist die Ölpumpe ausschließlich von der Elektromaschine antreibbar.

In einer weiteren Ausgestaltung ist mittels der Kupplung die Verbrennungskraftmaschine kraftschlüssig mit der Elektromaschine verbindbar und trennbar, so dass die Elektromaschine und damit auch die Ölpumpe unabhängig von der Drehzahl der Verbrennungskraftmaschine betreibbar sind. Die Elektromaschine kann von der Verbrennungskraftmaschine kraftschlüssig verbunden und getrennt werden. Dadurch ist es möglich die Elektromaschine zu betreiben ohne dass diese Einfluss auf die Verbrennungskraftmaschine hat. Die Elektromaschine kann somit nur dahingehend angesteuert werden, dass die Ölpumpe einen optimalen Öldruck liefert.

In einer ergänzenden Ausführungsform ist vor einem Start der Verbrennungskraftmaschine und/oder nach einem Stopp der Verbrennungskraftmaschine die Ölpumpe von der Elektromaschine antreibbar. Die Ölpumpe kann damit unabhängig vom Betrieb der Verbrennungskraftmaschine angetrieben werden.

Vorzugsweise ist die Ölpumpe mittels eines, vorzugsweise stufenlosen, Ölpumpengetriebes von der Elektromaschine antreibbar, so dass die Drehzahl der Ölpumpe variabel betreibbar ist. Die Ölpumpe kann damit variabel in Abhängigkeit von der Drehzahl der Elektromaschine angetrieben werden. Dies ermöglicht es, unabhängig von der Drehzahl der Elektromaschine den optimalen Öldruck einzustellen.

In einer Variante umfasst die Hybridantriebseinrichtung einen Öldruckspeicher, so dass mittels Öl unter Druck in dem Öldruckspeicher die Verbrennungskraftmaschine unabhängig von der Ölpumpe mit Öl versorgbar ist. Der Öldruckspeicher ermöglicht es, die Verbrennungskraftmaschine und gegebenenfalls Stellorgane unabhängig vom Betrieb der Elektromaschine mit Öl unter Druck zu versorgen. Dadurch braucht beispielsweise beim Starten der Verbrennungskraftmaschine die Elektromaschine nicht gesondert hochgefahren werden, um für den Start der Verbrennungskraftmaschine entsprechenden Öldruck zur Verfügung zu stellen.

Vorzugsweise ist mittels wenigstens eines Ventils der Öldruckspeicher nur ab einem Mindestöldruck von der Ölpumpe mit Öl auffüllbar. Der Öldruckspeicher wird somit nur dann aufgefüllt, wenn ein bestimmter Mindestöldruck vorhanden ist, um zu vermeiden, dass durch das Auffüllen des Öldruckspeichers für die Schmierung der Verbrennungskraftmaschine und gegebenenfalls für Stellorgane nicht genügend Öldruck vorhanden ist.

Vorzugsweise ist der Öldruck in Abhängigkeit wenigstens eines Parameters, z. B. Drehzahl und/oder Temperatur der Verbrennungskraftmaschine und/oder Viskosität des Öls, der Verbrennungskraftmaschine steuerbar und/oder regelbar. Es ist damit möglich, den optimalen Öldruck für den jeweiligen Betriebszustand der Verbrennungskraftmaschine zur Verfügung zu stellen.

Zweckmäßig ist von der Ölpumpe mit Öl unter Druck wenigstens ein Stellorgan antreibbar und/oder versorgbar.

In einer ergänzenden Variante dient das wenigstens eine Stellorgan zur Nockenwellenverstellung und/oder zum Vorspannen von Riemen- und/oder Ketten und/oder zum Einstellen des Ventilspiels. Die Stellorgane können damit unabhängig vom Betrieb der Verbrennungskraftmaschine mit Öl versorgt werden. Dadurch kann beispielsweise vor dem Start der Verbrennungskraftmaschine die jeweils günstigste Lage der Nockenwelle eingestellt werden.

Eine erfindungsgemäße Antriebseinrichtung für ein Kraftfahrzeug umfasst eine Verbrennungskraftmaschine zum Antrieb des Kraftfahrzeuges, eine Antriebswelle, vorzugsweise eine Kupplung zum kraftschlüssigen Verbinden und Trennen der Verbrennungskraftmaschine von der Antriebswelle, vorzugsweise ein Getriebe, eine elektrisch angetriebene Ölpumpe zur Versorgung der Verbrennungskraftmaschine mit Öl, vorzugsweise nur, zum Schmieren der Verbrennungskraftmaschine, insbesondere einen Öldruckspeicher, wobei von der Ölpumpe mit Öl unter Druck wenigstens ein Stellorgan antreibbar und/oder versorgbar ist. Die Stellorgane können damit in besonders vorteilhafter Weise unabhängig vom Betrieb der Verbrennungskraftmaschine mit Öl versorgt werden.

In einer weiteren Ausgestaltung dient das wenigstens eine Stellorgan zur Nockenwellenverstellung und/oder zum Vorspannen von Riemen- oder Ketten und/oder zum Einstellen des Ventilspiels.

In einer ergänzenden Variante ist vor einem Start der Verbrennungskraftmaschine und/oder nach einem Stopp der Verbrennungskraftmaschine und/oder während des Betriebes der Verbrennungsmaschine die Ölpumpe elektrisch antreibbar.

In einer weiteren Variante umfasst die Antriebseinrichtung einen Öldruckspeicher, so dass mittels unter Druck gespeicherten Öls die Verbrennungskraftmaschine unabhängig von der Ölpumpe mit Öl versorgbar ist.

In einer weiteren Ausgestaltung ist der Öldruck in Abhängigkeit wenigstens eines Parameters, z. B. Drehzahl und/oder Temperatur der Verbrennungskraftmaschine und/oder Viskosität des Öls, der Verbrennungskraftmaschine steuerbar und/oder regelbar.

Zweckmäßig ist die elektrisch angetriebene Ölpumpe in zwei Betriebszuständen mit einem normalen Öldruck und einem erhöhten Öldruck betreibbar und die Druckdifferenz zwischen dem normalen Öldruck und dem erhöhten Öldruck beträgt wenigstens ein bar. Insbesondere beträgt die Dauer des Betriebszustandes mit normalem Öldruck und/oder die Dauer des Betriebszustandes mit erhöhtem Öldruck wenigstens eine Sekunde.

In einer weiteren Ausführungsform ist in dem Betriebszustand mit dem erhöhten Öldruck auf das wenigstens eine Stellorgan eine größere Kraft aufbringbar als in dem Betriebszustand mit dem normalen Öldruck, so dass Stellorgane betätigbar sind, z. B. ein geschlossenes Ventil geöffnet werden kann.

In einer weiteren Ausgestaltung weist die Antriebseinrichtung nur eine elektrisch angetriebene Ölpumpe zur Versorgung der Verbrennungskraftmaschine mit Öl zum Schmieren auf.

In einer Variante umfasst die Antriebseinrichtung eine Elektromaschine zum Antrieb des Kraftfahrzeuges, so dass es sich um eine Hybridantriebseinrichtung handelt.

### Kurze Beschreibung der Zeichnungen

Im Nachfolgenden werden drei Ausführungsbeispiele der Erfindung unter Bezugnahme auf die beigefügten Zeichnungen näher beschrieben. Es zeigt:
- Fig. 1: eine stark schematisierte Darstellung einer Hybridantriebseinrichtung in einer ersten Ausführungsform,
- Fig. 2: eine stark schematisierte Darstellung der Hybridantriebseinrichtung in einer zweiten Ausführungsform,
- Fig. 3: eine stark schematisierte Darstellung der Hybridantriebseinrichtung in einer dritten Ausführungsform und
- Fig. 4: eine stark schematisierte Ansicht eines Kraftfahrzeuges.

### Ausführungsformen der Erfindung

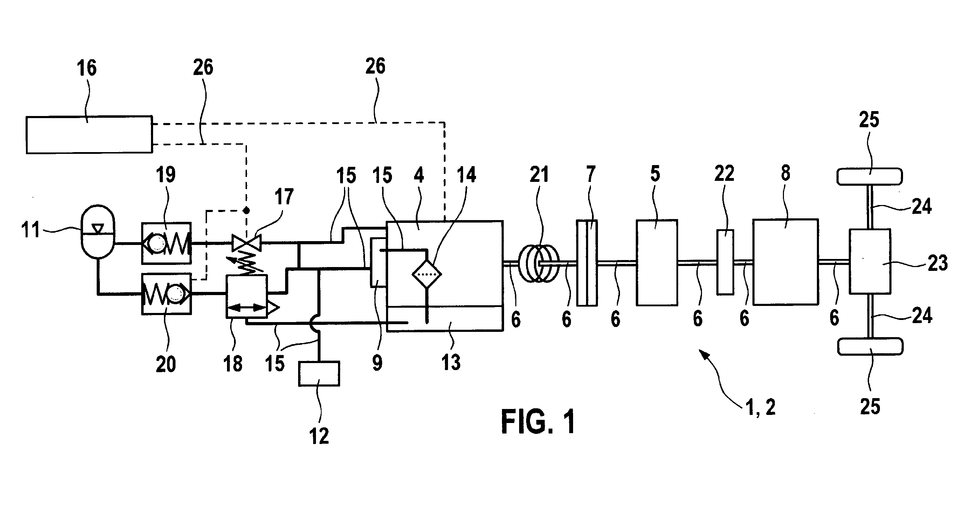

In Fig. 1 ist eine als Hybridantriebseinrichtung 1 ausgebildete Antriebseinrichtung 2 dargestellt. Die Hybridantriebseinrichtung 1 für ein Kraftfahrzeug 3 umfasst eine Verbrennungskraftmaschine 4 sowie eine Elektromaschine 5 jeweils zum Antrieb des Kraftfahrzeuges 3. Die Verbrennungskraftmaschine 4 und die Elektromaschine 5 sind mittels einer Antriebswelle 6 miteinander verbunden. Die mechanische Koppelung zwischen der Verbrennungskraftmaschine 4 und der Elektromaschine 5 kann mittels einer Kupplung 7 hergestellt und aufgehoben werden. Ferner ist in der Antriebswelle 6, welche die Verbrennungskraftmaschine 4 und die Elektromaschine 5 miteinander koppelt, eine Elastizität 21 angeordnet. Die Elektromaschine 5 ist mit einem Differentialgetriebe 23 mechanisch gekoppelt. In der Antriebswelle 6, welche die Elektromaschine 5 und das Differentialgetriebe 23 miteinander verbindet, ist ein Wandler 22 und ein Getriebe 8 angeordnet. Mittels des Differentialgetriebes 23 werden über die Radachsen 24 die Antriebsräder 25 angetrieben.

Zur Schmierung der Verbrennungskraftmaschine 5 ist eine Ölpumpe 9 vorgesehen, welche von der Verbrennungskraftmaschine 4 angetrieben wird. Die Ölpumpe 9 saugt das Öl von einem Ölsumpf 13 durch einen Filter 14 an. Das von der Ölpumpe 9 angesaugte Öl wird dann zur Schmierung der Verbrennungskraftmaschine 4 wieder dieser zugeführt. An den Öldruckkreislauf ist ferner ein Öldruckspeicher 11 angeschlossen.

Der Öldruckspeicher 11 wird von der Ölpumpe 9 mit Öl unter Druck gefüllt. Dabei erfolgt das Befüllen des Öldruckspeichers 11 erst ab einem bestimmten Mindestdruckes des von der Ölpumpe 9 zur Verfügung gestellten Öls. Hierzu ist in einer Ölleitung 15 ein nicht dargestellter Drucksensor angeordnet. Ein Folgeventil 18 wird erst dann geöffnet, wenn der Mindestöldruck vorliegt, so dass das Öl nach dem Folgeventil 18 durch ein zweites Rückschlagventil 20 in den Öldruckspeicher 11 einströmen kann. Zur Zuführung von Öl aus dem Öldruckspeicher 11 in die Verbrennungskraftmaschine 4 wird das Absperrorgan 17 geöffnet, so dass das Öl aus dem Öldruckspeicher 11 durch die Ölleitungen 15 zu der Verbrennungskraftmaschine 4 strömen kann. Ein in der Ölleitung 15 zwischen dem Absperrorgan 17 und dem Öldruckspeicher 11 angeordnetes erstes Rückschlagventil 19 verhindert, dass Öl unbeabsichtigt in den Öldruckspeicher 11 eingeleitet wird. Das zweite Rückschlagventil 20 dient dazu, dass Öl nicht unbeabsichtigt vom Ölspeicher 11 in die Verbrennungskraftmaschine 4 eingeleitet wird. Das Absperrorgan 17, das erste Rückschlagventil 19, und das zweite Rückschlagventil 20 werden von einer Steuereinheit 16 mittels strichliert dargestellter Steuerleitungen 26 gesteuert und/oder geregelt.

Bei einer Fehlfunktion des Absperrorganes 17, des Folgeventiles 18 und des ersten und zweiten Rückschlagventils 19, 20 oder durch Leckage bei hohen Stillstandszeiten kann der Öldruckspeicher 11 beim Andrehen bzw. Starten der Verbrennungskraftmaschine 4 vollständig oder nahezu vollständig entleert sein. In diesem Fall müsste die Ölpumpe 9 beim Andrehen neben der Verbrennungskraftmaschine 4 zusätzlich auch den Öldruckspeicher 11 versorgen, so dass ein Teil des zur Schmierung der Verbrennungskraftmaschine 4 beim Andrehen notwendigen Öls nicht zur Schmierung verwendet, sondern in den Öldruckspeicher 11 eingeleitet wird. Um dies zu verhindern, wird der Öldruckspeicher 11 - wie bereits beschrieben - erst ab einem bestimmten Mindestöldruck geöffnet, d. h. das Folgeventil 18 wird erst ab einem bestimmten Mindestöldruck zum Befüllen des Öldruckspeichers 11 geöffnet.

Wird die Verbrennungskraftmaschine 4 abgestellt und z. B. von der übrigen Hybridantriebseinrichtung 1, z. B. mittels der Kupplung 7, abgekuppelt, sinkt die Drehzahl der Verbrennungskraftmaschine 4 und die der Ölpumpe 9 bis zum Stillstand ab. Der Öldruckspeicher 11 kann zum Erhalt des Öldrucks bis zum vollständigen Auslaufen der Verbrennungskraftmaschine 4 zum Schmieren der mittels Öldruck geschmierten Teile der Verbrennungskraftmaschine 4 genutzt werden. Nach dem vollständigen Auslaufen der Verbrennungskraftmaschine 4 wird das Absperrorgan 17 von der Steuereinheit 17 geschlossen, so dass kein Öl mehr aus dem Öldruckspeicher 11 zu der Verbrennungskraftmaschine 4 strömen kann. Zum Befüllen des Öldruckspeichers 11 während des Betriebes der Brennkraftmaschine 4 wird das Folgeventil 18 nach dem Erreichen eines bestimmten Mindestöldruckes geöffnet, so dass Öl in den Öldruckspeicher 11 eingepumpt werden kann. Bei einem Startbefehl für die Verbrennungskraftmaschine 4 wird das Absperrorgan 17 von der Steuereinheit 16 geöffnet, bevor die Verbrennungskraftmaschine 4 anfängt sich zu drehen. Dadurch kann die Verbrennungskraftmaschine 4 noch vor dem Andrehen mit dem notwendigen Öldruck zur Schmierung versorgt werden, so dass ab der ersten Bewegung der Verbrennungskraftmaschine 4 eine Schmierung möglich ist.

Um einen ausreichenden Druckaufbau im Öldruckspeicher sicherzustellen, kann die Steuereinheit 16 einen Abbruch eines Starts der Verbrennungskraftmaschine 4, z. B. durch ein plötzlich reduzierten Fahrerwunschmoment hervorgerufen ("Change of Mind"), verzögert werden. Mit einer entsprechenden Mindestlaufzeit der Verbrennungskraftmaschine kann ein ausreichender Druck im Öldruckspeicher 11 für das Abstellen bzw. den darauf folgenden Start der Verbrennungskraftmaschine 4 sichergestellt werden.

Von der Ölpumpe 9 wird auch ein Stellorgan 12 mit Öl unter Druck angetrieben und/oder versorgt. Das Stellorgan 12 kann beispielsweise zur Nockenwellenverstellung, zum Vorspannen von Riemen- oder Ketten oder Einstellen des Ventilspiels dienen.

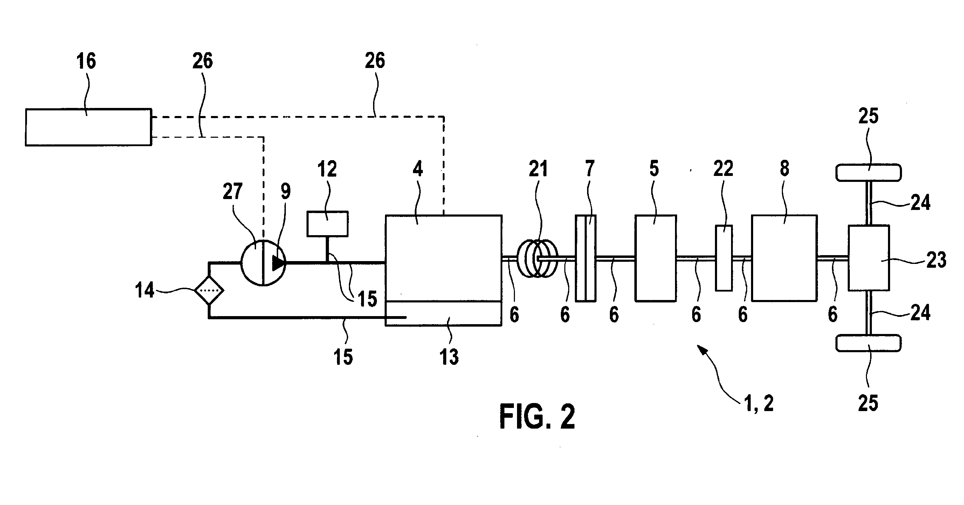

In Fig. 2 ist eine zweite Ausführungsform der Hybridantriebseinrichtung 1 dargestellt. Im Nachfolgenden werden im Wesentlichen nur die Unterschiede zu der ersten Ausführungsform gemäß Fig. 1 beschrieben. Eine Ölpumpe 9 wird von einem Elektropumpenmotor 27 unabhängig von der Verbrennungskraftmaschine 4 angetrieben. Die Ölpumpe 9 saugt durch Ölleitungen 15 Öl aus dem Ölsumpf 13 der Verbrennungskraftmaschine 4 an. Das angesaugte Öl wird durch einen Filter 14 und anschließend zu der Verbrennungskraftmaschine 4 zur Schmierung derselbigen angeleitet. Das von der Ölpumpe 9 zur Verfügung gestellte Öl unter Druck versorgt ferner ein Stellorgan 12. Die Ölpumpe 9 bzw. der Elektropumpenmotor 27 werden von der Steuereinheit 16 angesteuert. Die elektrisch angetriebene Ölpumpe 9 ist unabhängig von der Drehzahl der Verbrennungskraftmaschine 4. Dadurch kann vor einem Start der Verbrennungskraftmaschine 4 und/oder nach einem Stopp der Verbrennungskraftmaschine 4 zur Schmierung der Verbrennungskraftmaschine 4 Öl unter Druck zur Verfügung gestellt werden. Bei einem Startbefehl für die Verbrennungskraftmaschine 4 wird die Ölpumpe 9 in Betrieb genommen und garantiert so einen Mindestöldruck zur Schmierung der Verbrennungskraftmaschine 4 vor der ersten Umdrehung der Kurbelwelle der Verbrennungskraftmaschine 4. Daneben kann nach einem Stoppbefehl für die Verbrennungskraftmaschine 4 der Öldruck solange aufrechterhalten werden bis die Antriebswelle 6 der Verbrennungskraftmaschine 4 steht. Ferner ist es möglich, den Öldruck bezüglich des Betriebszustandes der Verbrennungskraftmaschine 4 zu optimieren. Hierzu wird der Öldruck in Abhängigkeit wenigstens eines Parameters der Verbrennungskraftmaschine 4, z. B. Drehzahl oder Temperatur, gesteuert und/oder geregelt.

Die Ölpumpe 9 versorgt auch Stellorgane 12 mit Öl. Beispielsweise können mittels Riemen - oder Kettenspanner vor einer ersten Bewegung der Verbrennungskraftmaschine 4 Riemen - oder Ketten stärker vorgespannt werden, so dass die Verbrennungskraftmaschine 4 geräusch-, schwingungs- und verschleißärmer anläuft. Mittels einer konstruktiv geänderten Auslegung der Stellorgane 12 lassen sich nicht nur situationsbedingt, sondern auch durch den Einsatz höher Öldrucke absolut gesehen z. B. erhöhte Riemen- oder Kettenspannungen einstellen, die einen Start der Verbrennungskraftmaschine 4 positiv beeinflussen. Hydrostößel, die z. B. das Ventilspiel der betriebswarmen Verbrennungskraftmaschine 4 einstellen, können bereits beim Start der Verbrennungskraftmaschine 4 sofort optimal eingestellt werden (bei einer Hybridantriebseinrichtung 4 erfolgt ein Start und ein Stopp der Verbrennungskraftmaschine 4 häufig bei einer betriebswarmen Verbrennungskraftmaschine 4). Durch eine Überkompensation des Ventilspiels ist es möglich, selbst geschlossene Ventile leicht zu öffnen, um beim Andrehen der Kurbelwelle der Verbrennungskraftmaschine 4 eine Dekomprimierung der Zylinder zu erreichen (nicht dargestellt). Dies ist besonders vorteilhaft, da sich durch die Reduzierung der Kompressionsmomente eine weitere Reduzierung der notwendigen Antriebsmomente beim Start der Verbrennungskraftmaschine 4 erreichen lassen. Eine Nockenwellenverstellung kann zur Einstellung geeigneter Ventilstellungen, insbesondere auch im Hinblick auf die vorher ermittelte Abstellposition der Verbrennungskraftmaschine 4, und den bekannten Ventilsteuerzeiten genutzt werden (nicht dargestellt).

Durch den erhöhten Öldruck kann der Einsatz von Druckminderventilen, z. B. in Ölleitungen 15, zur Begrenzung des lokal wirkenden Öldrucks, z. B. an bestimmten Lagerstellen oder Dichtungen, notwendig werden, um ein Austreten oder gar eine Zerstörung der Dichtungen oder Lager zu vermeiden (nicht dargestellt).

Die in Hybridantriebseinrichtungen 1 eingesetzten Verbrennungskraftmaschinen 4 werden häufig bei niedrigen Drehzahlen und hohen Lasten genutzt. In diesen Betriebszuständen ist ein erhöhter Bedarf der Öldruckversorgung elektrisch gut realisierbar, da die von dem Elektropumpenmotor 27 elektrisch angetriebene Ölpumpe 9 drehzahlunabhängig von der Verbrennungskraftmaschine 4 mit einem guten Wirkungsgrad arbeitet. In Kraftfahrzeugen 4 mit einer Hybridantriebseinrichtung 1 ist im Allgemeinen ein Hochvoltbordnetz vorhanden, so dass der Elektropumpenmotor 27 gut mit Strom versorgt ist und einen hohen Wirkungsgrad aufweist. Bei einer von der Verbrennungskraftmaschine 4 direkt angetriebenen Ölpumpe 9 wird die Ölpumpe 9 bei hohen Drehzahlen abgeriegelt und kann damit nicht mehr ihren optimalen Betriebspunkt erreichen.

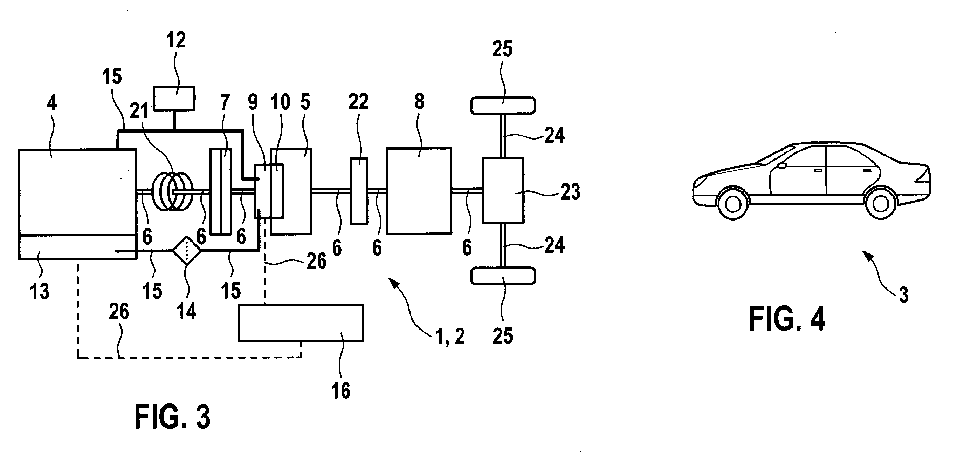

In Fig. 3 ist eine dritte Ausführungsform der Hybridantriebseinrichtung 1 dargestellt. Im Nachfolgenden werden im Wesentlichen nur die Unterschiede zu der zweiten Ausführungsform beschrieben. Die Ölpumpe 9 wird anstelle von dem Elektropumpenmotor 27 von der Elektromaschine 5 zum Antrieb des Kraftfahrzeuges 3 angetrieben. Dadurch ist in vorteilhafter Weise kein zusätzlicher Elektropumpenmotor 27 zum Antrieb der Ölpumpe 9 erforderlich. Mittels der Kupplung 7 kann die mechanische Verbindung zwischen der Elektromaschine 5 und der Verbrennungskraftmaschine 4 hergestellt und aufgehoben werden. Die Verbrennungskraftmaschine 4 wird zum Starten von der Elektromaschine 5 angetrieben. Dadurch wird auch die Ölpumpe 9 vor dem Starten der Verbrennungskraftmaschine 4 angetrieben und kann Öl zur Schmierung der Verbrennungskraftmaschine 4 zur Verfügung stellen. Die Ölpumpe 9 wird von der Elektromaschine 5 mittels eines stufenlosen Ölpumpengetriebes 10 angetrieben. Dadurch können beispielsweise beim Start der Verbrennungskraftmaschine 4 bereits hohe Öldrucke zur Verfügung gestellt werden, obwohl die Elektromaschine 5 noch eine geringe Drehzahl aufweist. Aufgrund der Abkoppelbarkeit mittels der Kupplung 7 der Elektromaschine 5 von der Verbrennungskraftmaschine 4 kann die Elektromaschine 5 auch nur zum Antrieb der Ölpumpe 9, z. B. vor dem Start der Verbrennungskraftmaschine 4, betrieben werden. Die Kupplung 7 und/oder das Ölpumpengetriebe 10 gestatten somit den jeweils optimalen Öldruck zur Schmierung der Verbrennungskraftmaschine 4 unabhängig von der Drehzahl der Verbrennungskraftmaschine 4 zur Verfügung zu stellen. Auch beim Auslaufen der Verbrennungskraftmaschine 4 kann noch ein optimaler Öldruck zur Verfügung gestellt werden. Ferner ist es möglich, auch bei der dritten Ausführungsform der Hybridantriebseinrichtung 1 einen Öldruckspeicher 11 vorzusehen (nicht dargestellt).

Die Einzelheiten der verschiedenen Ausführungsbeispiele sind miteinander kombinierbar, sofern nichts Gegenteiliges erwähnt wird.

Insgesamt betrachtet sind mit der erfindungsgemäßen Hybridantriebseinrichtung 1 wesentliche Vorteile verbunden. In der Hybridantriebseinrichtung 1 wird die Ölpumpe 9 von der Elektromaschine 5 angetrieben, so dass kein zusätzlicher Elektromotor zum Antrieb der Ölpumpe 9 erforderlich ist. Ferner können in einer erfindungsgemäßen Antriebseinrichtung 2 Stellorgane 12 von der Ölpumpe 9 mit Öl unter Druck versorgt werden oder von diesem angetrieben werden. Die Stellorgane 12 ermöglichen es, aufgrund der Versorgung mit einer elektrisch angetriebenen Ölpumpe 9 den jeweils optimalen Druck für das Stellorgane 12 einzustellen.

## Patentansprüche

1. Hybridantriebseinrichtung (1) für ein Kraftfahrzeug (3), umfassend
- eine Verbrennungskraftmaschine (4) zum Antrieb des Kraftfahrzeuges (3),
- eine Elektromaschine (5) zum Antrieb des Kraftfahrzeuges (3),
- eine Antriebswelle (6),
- eine Kupplung (7) zum kraftschlüssigen Verbinden und Trennen der Verbrennungskraftmaschine (4) von der Antriebswelle (6) und
- eine Ölpumpe (9) zur Versorgung der Verbrennungskraftmaschine (4) mit Öl, wobei die Ölpumpe (9) von der Elektromaschine (5) antreibbar ist,
dadurch gekenntzeichnet, dass
die Hybridantriebseinrichtung (1) einen Öldruckspeicher (11) umfasst, so dass mittels Öl unter Druck in dem Öldruckspeicher (11) die Verbrennungskraftmaschine (4) unabhängig von der Ölpumpe (9) mit Öl versorgbar ist.

2. Hybridantriebseinrichtung nach Anspruch 1,
**dadurch gekennzeichnet, dass**
die Ölpumpe (9) ausschließlich von der Elektromaschine (5) antreibbar ist.

3. Hybridantriebseinrichtung nach Anspruch 1 oder 2,
**dadurch gekennzeichnet, dass**
mittels der Kupplung (7) die Verbrennungskraftmaschine (4) kraftschlüssig mit der Elektromaschine (5) verbindbar und trennbar ist, so dass die Elektromaschine (5) und damit auch die Ölpumpe (9) unabhängig von der Drehzahl der Verbrennungskraftmaschine (4) betreibbar ist.

4. Hybridantriebseinrichtung nach Anspruch 3,
**dadurch gekennzeichnet, dass**
vor einem Start der Verbrennungskraftmaschines (4) und/oder nach einem Stopp der Verbrennungskraftmaschine (4) die Ölpumpe (9) von der Elektromaschine (5)

5. Hybridantriebseinrichtung nach einem oder mehreren der vorhergehenden Ansprüche,
**dadurch gekennzeichnet, dass**
die Ölpumpe (9) mittels eines, vorzugsweise stufenlosen, Ölpumpengetriebes (10) von der Elektromaschine (5) antreibbar ist, so dass die Drehzahl der Ölpumpe (9) variabel betreibbar ist.

6. Hybridantriebseinrichtung nach Anspruch 5,
**dadurch gekennzeichnet, dass**
mittels wenigstens eines Ventils (18, 20) der Öldruckspeicher (11) nur ab einem Mindestöldruck von der Ölpumpe (9) mit Öl auffüllbar ist.

7. Hybridantriebseinrichtung nach einem oder mehren der vorhergehenden Ansprüche,
**dadurch gekennzeichnet, dass**
der Öldruck in Abhängigkeit wenigstens eines Parameters, z. B. Drehzahl und/oder Temperatur der Verbrennungskraftmaschine (4) und/oder Viskosität des Öls, der Verbrennungskraftmaschine (4) steuerbar und/oder regelbar ist.

8. Hybridantriebseinrichtung nach einem oder mehren der vorhergehenden Ansprüche,
**dadurch gekennzeichnet, dass**
von der Ölpumpe (9) mit Öl unter Druck wenigstens ein Stellorgan (12) antreibbar und/oder versorgbar ist.

9. Hybridantriebseinrichtung nach Anspruch 8,
**dadurch gekennzeichnet, dass**
das wenigstens eine Stellorgan (12) zur Nockenwellenverstellung und/oder zum Vorspannen von Riemen- und/oder Ketten und/oder zum Einstellen des Ventilspiels dient.

## Claims

1. Hybrid drive device (1) for a motor vehicle (3), comprising
- an internal combustion engine (4) for driving the motor vehicle (3),
- an electric machine (5) for driving the motor vehicle (3),
- a drive shaft (6),
- a clutch (7) for connecting the internal combustion engine (4) in a frictionally locking fashion to the drive shaft (6) and disconnecting it therefrom, and
- an oil pump (9) for supplying the internal combustion engine (4) with oil, wherein the oil pump (9) can be driven by the electric machine (5),
**characterized in that**
the hybrid drive device (1) comprises an oil pressure accumulator (11), with the result that the internal combustion engine (4) can be supplied with oil by means of oil under pressure in the oil pressure accumulator (11), independently of the oil pump (9).

2. Hybrid drive device according to Claim 1,
**characterized in that**
the oil pump (9) can be driven exclusively by the electric machine (5).

3. Hybrid drive device according to Claim 1 or 2,
**characterized in that**
by means of the clutch (7) the internal combustion engine (4) can be connected in a frictionally locking fashion to the electric machine (5) and disconnected therefrom, with the result that the electric machine (5), and therefore also the oil pump (9) can be operated independently of the rotational speed of the internal combustion engine (4).

4. Hybrid drive device according to Claim 3,
**characterized in that**
the oil pump (9) can be driven by the electric machine (5) before starting of the internal combustion engine (4) and/or after stopping of the internal combustion engine (4).

5. Hybrid drive device according to one or more of the preceding claims,
**characterized in that**
the oil pump (9) can be driven by the electric machine (5) by means of a, preferably continuously variable, oil pump transmission (10), with the result that the rotational speed of the oil pump (9) can be operated in a variable fashion.

6. Hybrid drive device according to Claim 5,
**characterized in that**
the oil pressure accumulator (11) can be filled with oil by means of at least one valve (18, 20) only starting from a minimum oil pressure of the oil pump (9) .

7. Hybrid drive device according to one or more of the preceding claims,
**characterized in that**
the oil pressure can be open-loop and/or closed-loop controlled as a function of at least one parameter, for example rotational speed and/or temperature of the internal combustion engine (4) and/or the viscosity of the oil, of the internal combustion engine (4).

8. Hybrid drive device according to one or more of the preceding claims,
**characterized in that**
at least one actuator element (12) can be driven and/or supplied by the oil pump (9) with oil under pressure.

9. Hybrid drive device according to Claim 8,
**characterized in that**
the at least one actuator element (12) serves to adjust the camshaft and/or to prestress belts and/or chains and/or to set the valve play.

## Revendications

1. Système d'entraînement hybride (1) pour un véhicule automobile (3), comportant
- un moteur à combustion interne (4) pour l'entraînement du véhicule automobile (3),
- un moteur électrique (5) pour l'entraînement du véhicule automobile (3),
- un arbre d'entraînement (6),
- un embrayage (7) pour relier par force le moteur à combustion interne (4) à l'arbre d'entraînement (6) et pour le désaccoupler par force de ce dernier, et
- une pompe à huile (9) pour alimenter en huile le moteur à combustion interne (4), la pompe à huile (9) pouvant être entraînée par le moteur électrique (5),
**caractérisé en ce que**
le système d'entraînement hybride (1) comporte un accumulateur de pression d'huile (11), de telle sorte que le moteur à combustion interne (4) puisse être alimenté en huile indépendamment de la pompe à huile (9) au moyen d'huile sous pression dans l'accumulateur de pression d'huile (11).

2. Système d'entraînement hybride selon la revendication 1,
**caractérisé en ce que**
la pompe à huile (9) peut être entraînée exclusivement par le moteur électrique (5).

3. Système d'entraînement hybride selon la revendication 1 ou 2,
**caractérisé en ce**
**qu'**au moyen de l'embrayage (7), le moteur à combustion interne (4) peut être relié par force au moteur électrique (5) et peut être désaccouplé par force de ce dernier, de telle sorte que le moteur électrique (5), et ainsi également la pompe à huile (9), puissent fonctionner indépendamment du régime du moteur à combustion interne (4).

4. Système d'entraînement hybride selon la revendication 3,
**caractérisé en ce que**
la pompe à huile (9) peut être entraînée par le moteur électrique (5) avant un démarrage du moteur à combustion interne (4) et/ou après un arrêt du moteur à combustion interne (4).

5. Système d'entraînement hybride selon l'une quelconque ou plusieurs des revendications précédentes,
**caractérisé en ce que**
la pompe à huile (9) peut être entraînée par le moteur électrique (5) au moyen d'une transmission de pompe à huile (10) de préférence à variation continue, de telle sorte que le régime de la pompe à huile (9) puisse être commandé de manière variable.

6. Système d'entraînement hybride selon la revendication 5,
**caractérisé en ce que**
l'accumulateur de pression d'huile (11) ne peut être rempli d'huile par la pompe à huile (9), au moyen d'au moins une soupape (18, 20), qu'à partir d'une pression d'huile minimale.

7. Système d'entraînement hybride selon l'une quelconque ou plusieurs des revendications précédentes,
**caractérisé en ce que**
la pression d'huile peut être commandée et/ou régulée en fonction d'au moins un paramètre du moteur à combustion interne (4), par exemple le régime et/ou la température du moteur à combustion interne (4) et/ou la viscosité de l'huile.

8. Système d'entraînement hybride selon l'une quelconque ou plusieurs des revendications précédentes,
**caractérisé en ce**
**qu'**au moins un actionneur (12) peut être entraîné et/ou alimenté par la pompe à huile (9) à l'aide d'huile sous pression.

9. Système d'entraînement hybride selon la revendication 8,
**caractérisé en ce**
**que** l'au moins un actionneur (12) sert au réglage d'arbres à cames et/ou à la précontrainte de courroies et/ou chaînes et/ou à l'ajustage du jeu de soupapes.
